# EUROPEAN PATENT SPECIFICATION

(11) **EP 2 448 211 B1**
(45) Date of publication and mention of the grant of the patent: **08.10.2014**
(21) Application number: 10803889.4
(22) Date of filing: 21.07.2010
(51) Int. Cl.: H04L 29/06, H04L 12/58, G06F 21/55, G06F 21/56

(54) **METHOD, SYSTEM AND EQUIPMENT FOR DETECTING BOTNETS**
VERFAHREN, SYSTEM UND AUSRÜSTUNG ZUM ERKENNEN VON BOTNETZEN
PROCÉDÉ, SYSTÈME, ET ÉQUIPEMENT CORRESPONDANT, ADAPTÉS POUR DÉTECTER UN RÉSEAU DE ZOMBIES

(30) Priority: 29.07.2009 CN 200910160680
(43) Date of publication of application: 02.05.2012
(73) Proprietor: Chengdu Huawei Symantec Technologies Co., Ltd, Sichuan 611731 (CN)
(72) Inventor: JIANG, Wu, Sichuan 611731 (CN)
(74) Representative: Thun, Clemens
(86) International application number: PCT/CN2010/075346
(87) International publication number: WO 2011/012056

(56) References cited:
- EP-A1- 1 739 921
- EP-A1- 1 906 620
- CN-A- 101 282 340
- CN-A- 101 360 019
- CN-A- 101 404 658
- CN-A- 101 621 428
- US-A1- 2008 005 316
- ANESTIS KARASARIDIS ET AL: "Wide-Scale Botnet Detection and Characterization", PROCEEDINGS OF THE WORKSHOP ON HOT TOPICS IN UNDERSTANDINGBOTNETS (HOTBOTS), X, XX, no. 1st, 10 April 2007 (2007-04-10), page 8PP, XP007903765,

## Description

### FIELD OF THE INVENTION

The present invention relates to the field of communications, and in particular, to a Botnet detection method, a Botnet detection system, and a related device.

### BACKGROUND OF THE INVENTION

With the development of networks, attack behaviors of hackers also present a spreading trend, and a Botnet is a manner of the attack behaviors. The Botnet forms an attack platform, various attack behaviors may be initiated by utilizing this platform, the attack behaviors may result in breakdown of an entire basic information network or an important application system, may also result in leakage of lots of confidentiality or personal privacy, and may be further used to commit other illegal criminal activities such as network fraud. Distributed Denial Of Service (DDOS) attacks, sending spams, stealing secrets, and abusing resources are attack behaviors already found and launched by utilizing the Botnet, and these behaviors cause a serious harm to both the entire network and users themselves. As various new attack types occur in future, the Botnet may be further used to initiate new unknown attacks.

Currently, research on the Botnet is just started. At present, a technology for alleviating this threat is mainly to concentrate on prevention in advance or handling after an attack event. In a general case, only when finding that a certain large station or important network is subject to an attack of the Botnet, a national network security monitoring department begins to mobilize lots of workforces and related departments to perform cooperative inspection, it needs to take a very long time before a control center and a main controlling party of the Botnet are actually found, but economic losses caused in this period of time are inestimable. Therefore, it is very necessary to explore an effective Botnet detection method.

In the prior art, a main detection method for the Botnet may be a honeynet technology, that is, a bot program sample is obtained through means such as a honeypot, malicious code analysis means such as reverse engineering are adopted to obtain related information hidden in a code and required when logging on the Botnet, and a customized bot program is used to log into the Botnet, and further a counter-measure is taken.

However, in the prior art, a collected bot program sample needs to be analyzed and processed, and further, related information obtained from the bot program sample through analysis needs to be used to log into the Botnet before further processing can be performed, so the Botnet cannot be detected in real time.

Document EP1906620 A1, discloses a method and apparatus for detecting compromised host computers (e.g., Bots). For example, the method identifies a plurality of suspicious hosts. Once identified, the method analyzes network traffic of the plurality suspicious hosts to identify a plurality of Suspect controllers. The method then classifies the plurality of candidate Bots into at least one group. The method then identifies members of each of the at least one group that are connected to a same controller from the plurality suspicious controllers, where the members are identified to be part of a Botnet.

Document CN 101282340 A, discloses a network attack processing method and a processing apparatus. The method may include: after determining an attacked object, searching for a recorded attack event related to the attacked object to determine a controlled host in an attack network; searching for a recorded control event related to the controlled host to determine a controlling host in the attack network; and determining a detected host which performs similar communication with the multiple controlling hosts as an attack manipulator. Accordingly, embodiments for a processing apparatus adapted to perform the methods are disclosed herein.

Document XP007903765, discloses a methodology to detect, track and characterize botnets on a large Tier-1 ISP network. The approach presented here differs from previous attempts to detect botnets by employing scalable non-intrusive algorithms that analyze vast amounts of summary traffic data collected on selected network links. Botnet analysis is performed mostly on transport layer data and thus does not depend on particular application layer information. Algorithms produce alerts with information about controllers. Alerts are followed up with analysis of application layer data, that indicates less than 2% false positive rates.

### Summary of the invention

Embodiments of the present invention provide a Botnet detection method, a Botnet detection system, and a related device, which can detect a Botnet in real time.

An embodiment of the present invention provides a Botnet detection method, which includes: receiving, by a detection platform, attacker information sent by a security detection device, in which the attacker information is generated when the security detection device detects a data attack, and the attacker information at least includes an attacker address list; determining, by the detection platform, whether addresses in the attacker address list belong to a known Botnet; performing, by the detection platform, message monitoring on each attacker corresponding to the attacker address list if the detection platform determines that addresses in the attacker address list do not belong to a known Botnet; and determining, by the detection platform, controlling party information of the Botnet according to a result of the message monitoring; wherein the determining, by the detection platform, the controlling party information of the Botnet according to the result of the message monitoring comprises: generating, by the detection platform, triplet information according to the result of the message monitoring, wherein the triplet information comprises an attacker address, a peer address communicating with the attacker address, and a communication port;obtaining, by the detection platform, a suspicious address with the largest repetitive occurrence number in peer addresses communicating with the attacker address; and judging, by the detection platform, whether the proportion occupied by the suspicious address in all peer addresses communicating with the attacker address is greater than a preset threshold value, and determining that the suspicious address is the address of the Botnet controlling party if the proportion is greater than the preset threshold value.

An embodiment of the present invention provides a Botnet detection system, which includes: a security detection device, configured to detect a data attack, and generate attacker information according to the data attack, in which the attacker information at least includes an attacker address list; and a detection platform, configured to receive the attacker information sent by the security detection device, judge whether addresses in the attacker address list belong to a known Botnet, perform message monitoring on each attacker corresponding to the attacker address list if the detection platform determines that addresses in the attacker address list do not belong to the known Botnet, and determine controlling party information of the Botnet according to a result of the message monitoring; w herein the detection platform configured to determine controlling party information of the Botnet according to a result of the message monitoring comprises: the detection platform configured to generate triplet information according to the result of the message monitoring, wherein the triplet information comprises an attacker address, a peer address communicating with the attacker address, and a communication port; obtain a suspicious address with the largest repetitive occurrence number in peer addresses communicating with the attacker address; judge whether the proportion occupied by the suspicious address in all peer addresses communicating with the attacker address is greater than a preset threshold value, and determine that the suspicious address is the address of the Botnet controlling party if the proportion is greater than the preset threshold value.

An embodiment of the present invention provides a detection platform, which includes: a receiving unit, configured to receive attacker information sent by a security detection device, in which the attacker information is generated when the security detection device detects a data attack, and the attacker information at least includes an attacker address list; a judgment unit, configured to judge whether addresses in the attacker address list belong to a known Botnet; a message monitoring unit, configured to perform message monitoring on each attacker corresponding to the attacker address list if the addresses in the attacker address list do not belong to the known Botnet; and a determination unit, configured to determine controlling party information of the Botnet according to a result of the message monitoring of the message monitoring unit; wherein the determination unit comprises: a generation sub-unit, configured to generate triplet information according to the result of the message monitoring, wherein the triplet information comprises an attacker address, a peer address communicating with the attacker address, and a communication port; an obtaining sub-unit, configured to obtain a suspicious address with the largest repetitive occurrence number in peer addresses communicating with the attacker address; and a verification sub-unit, configured to judge whether the proportion occupied by the suspicious address in all peer addresses communicating with the attacker address is greater than a preset threshold value, and determine that the suspicious address is the address of the Botnet controlling party if the proportion is greater than the preset threshold value.

It may be seen from the foregoing technical solutions that, the embodiments of the present invention have the following advantages.

In the embodiments of the present invention, the detection platform may perform the message monitoring on each attacker according to the attacker information sent by the security detection device, and determine the controlling party information of the Botnet according to the result of message monitoring; the solutions of the embodiments of the present invention may perform message monitoring in real time on an attacker who is performing an attack, thereby obtaining related information of the Botnet. Therefore, the solutions of the embodiments of the present invention can detect the Botnet in real time.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort.
FIG 1 is a schematic diagram of an embodiment of a Botnet detection method according to an embodiment of the present invention;
FIG 2 is a schematic diagram of another embodiment of a Botnet detection method according to an embodiment of the present invention;
FIG 3 is a schematic diagram of still another embodiment of a Botnet detection method according to an embodiment of the present invention;
FIG 4 is a schematic diagram of an embodiment of a Botnet detection system according to an embodiment of the present invention;
FIG 5 is a schematic diagram of an embodiment of a detection platform according to an embodiment of the present invention; and
FIG 6 is a schematic diagram of another embodiment of a detection platform according to an embodiment of the present invention.

### DETAILED DESCRIPTION OF THE EMBODIMENTS

To make the technical solution under the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort. Embodiments of the present invention provide a Botnet detection method, a Botnet detection system, and a related device, which are used to detect a Botnet in real time.

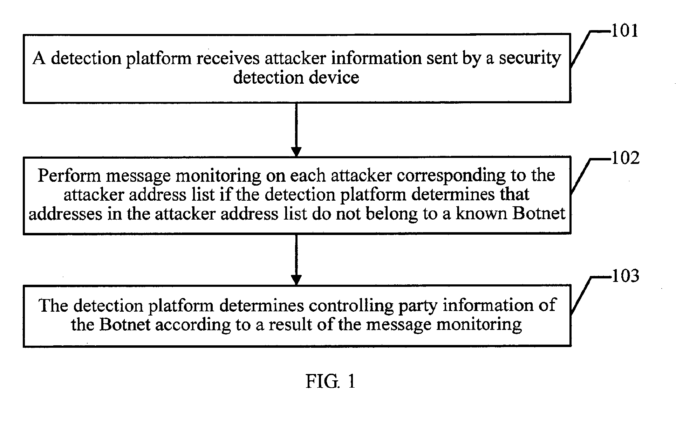

Referring to FIG 1, an embodiment of a Botnet detection method in an embodiment of the present invention includes the following steps.

Step 101: A detection platform receives attacker information sent by a security detection device.

In this embodiment, when detecting a data attack, the security detection device generates the attacker information according to the data attack, and sends the attacker information to the detection platform.

The attacker information in this embodiment at least includes an attacker address list, and may further include other information in a practical application, and specific information is not limited herein.

Step 102: The detection platform performs message monitoring on each attacker corresponding to the attacker address list if the detection platform determines that addresses in the attacker address list do not belong to a known Botnet.

In this embodiment, after the detection platform receives the attacker information sent by the security detection device, if the detection platform determines that the addresses in the attacker address list in the attacker information do not belong to the known Botnet, the detection platform performs message monitoring on each attacker corresponding to the attacker address list.

Step 103: The detection platform determines controlling party information of the Botnet according to a result of the message monitoring.

After performing the message monitoring on the attacker, the detection platform may determine the controlling party information of the Botnet according to the result of the monitoring, and the specific determining procedure is described in detail in a subsequent embodiment.

In this embodiment, the detection platform may perform the message monitoring on each attacker according to the attacker information sent by the security detection device, and determine the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time.

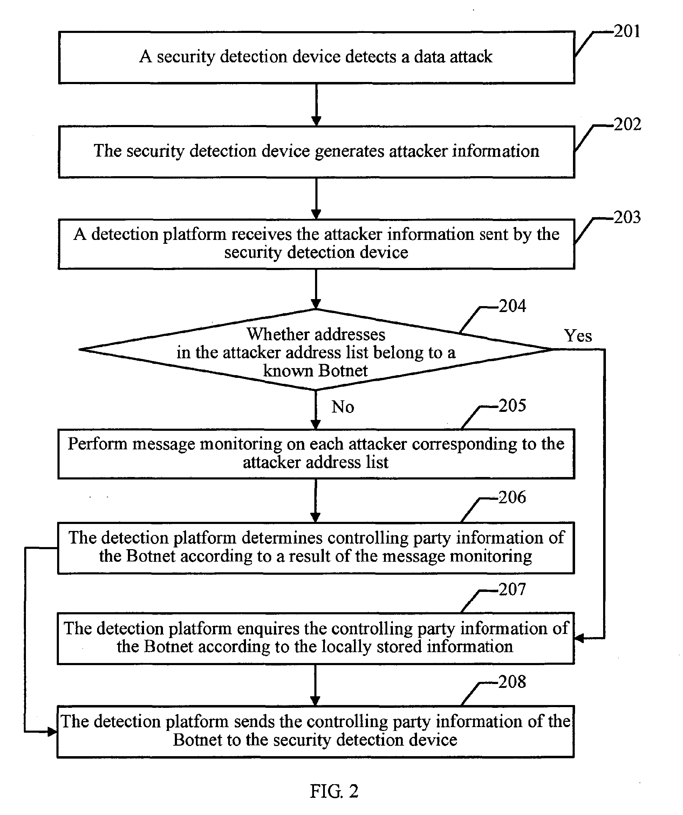

A Botnet detection procedure is illustrated above from the viewpoint of the detection platform, and for convenience of understanding, the foregoing Botnet detection procedure is described in detail in the following description from the viewpoint of interaction between the security detection device and the detection platform. Referring to FIG 2, another embodiment of a Botnet detection method in an embodiment of the present invention includes the following steps.

Step 201: A security detection device detects a data attack.

In this embodiment, the security detection device may be a DDOS detection device, an SPAM detection device, a firewall, a Unified Threat Management (UTM) detection device, or a security detection device in other types.

Accordingly, the data attack detected by the security detection device is a DDOS attack, an SPAM attack, a firewall attack, a UTM attack, or a data attack in other types.

It should be noted that, in this embodiment, a procedure that the security detection device detects the data attack is common sense known by persons skilled in the art.

Step 202: The security detection device generates attacker information.

In this embodiment, after detecting the data attack, the security detection device may generate the attacker information according to the data attack, and specifically, the attacker information at least includes an attacker address list, and additionally may further include some other information.

The attacker information in this embodiment may include: "Internet Protocol (IP) address of an attacked object", "IP address list of an attacker", " attack type", " attack target port", "attack initiation time", "attack end time", "number of attack times", and "attack feature".

The "IP address of an attacked obj ect" refers to an IP address of a host subj ect to a data attack.

The "IP address list of an attacker" refers to a set of IP addresses of real hosts initiating the data attack.

The "attack type" refers to a specific type of the data attack, or a more specific sub-type.

The "attack target port" refers to a port of the host subject to the data attack.

The "attack initiation time" refers to time when the data attack is initiated.

The "attack end time" refers to time when the data attack ends.

The "number of attack times" refers to the number of times by which the host is continuously attacked.

The "attack feature" refers to some message information or sampling data extracted from an attack message.

It should be noted that, the attacker information according to this embodiment is only a specific instance, the attacker information may further include more other information in a practical application, and specific information is not limited herein.

In this embodiment, an IP address is taken as an address example for illustration, and it may be understood that, in a practical application, likewise, an address in other types may be adopted, and the specific type is not limited herein.

Step 203: A detection platform receives the attacker information sent by the security detection device.

After generating the attacker information, the security detection device may send the attacker information to the detection platform.

Step 204: Judge whether addresses in the attacker address list belong to a known Botnet, if the addresses in the attacker address list belong to the known Botnet, perform step 207, and if the addresses in the attacker address list do not belong to the known Botnet, perform step 205.

After receiving the attacker information sent by the security detection device, the detection platform may judge whether the addresses in the list belong to the known Botnet from the attacker address list in the attacker information.

It should be noted that, in this embodiment, after detecting a new Botnet, the detection platform stores related information of the Botnet locally, such as a controlling party address and a controlled party address. When subsequently obtaining the attacker address list, the detection platform may judge whether the address belongs to the known Botnet.

Step 205: Perform message monitoring on each attacker corresponding to the attacker address list.

In this embodiment, if it is determined that the addresses in the attacker address list do not belong to the known Botnet, which illustrates that the data attack detected by the security detection device is from an unknown Botnet, the detection platform performs the message monitoring on the attacker, that is, intercepting a message flowing through the attacker, and analyzing the message.

It should be noted that, the message monitoring in this embodiment may set a preset duration, that is, the message monitoring is performed on the attacker in the duration.

Step 206: The detection platform determines controlling party information of the Botnet according to a result of the message monitoring, and step 208 is performed.

In this embodiment, after performing the message monitoring on the attacker, the detection platform obtains the monitoring result, the detection platform may judge which address communicates frequently with these attackers in the preset duration according to the monitoring result, if the detection platform detects that the attackers all communicate with the same address frequently, and the frequency exceeds a preset threshold, it may be determined that a host corresponding to the address is a Botnet controlling party, and the address is a Botnet controlling party address.

It should be noted that, after the controlling party information of the Botnet is determined, the address of the Botnet controlling party and the address of the attacker may be stored locally, and the Botnet is set as a known Botnet.

Step 207: The detection platform enquires the controlling party information of the Botnet according to the locally stored information.

In this embodiment, if it is determined that the addresses in the attacker address list belong to the known Botnet, because the detection platform has locally stored related information of the known Botnet, the controlling party information of the Botnet may be directly enquired.

Step 208: The detection platform sends the controlling party information of the Botnet to the security detection device.

In this embodiment, after determining the controlling party information of the Botnet, the detection platform may send the controlling party information of the Botnet to the security detection device, so as to be convenient for the security detection device to perform subsequent processing according to the controlling party information of the Botnet, such as an attack counter-measure.

It should be noted that, step 208 in this embodiment is an optional step, in some cases, the detection platform does not need to send the controlling party information of the Botnet to the security detection device. For example, when the security detection device is an SPAM detection device, once the SPAM detection device detects an SPAM attack, the address of the mail may be directly listed in a blacklist, and mails sent from the address are rejected, so the controlling party information of the Botnet may not need to be sent.

In this embodiment, the detection platform may perform the message monitoring on each attacker according to the attacker information sent by the security detection device, and determine the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time. Secondly, in this embodiment, when the controlling party information of the Botnet is determined, by utilizing characteristics of the Botnet, an address communicating with each attacker the most frequently is enquired and is used as the address of the Botnet controlling party, so the detection accuracy can be effectively improved.

Thirdly, in this embodiment, after determining the controlling party information of the Botnet, the detection platform may send the controlling party information of the Botnet to the security detection device, so the security detection device is enabled to perform source tracing, and subsequent processing is performed according to the controlling party information of the Botnet, thereby further ensuring the network security.

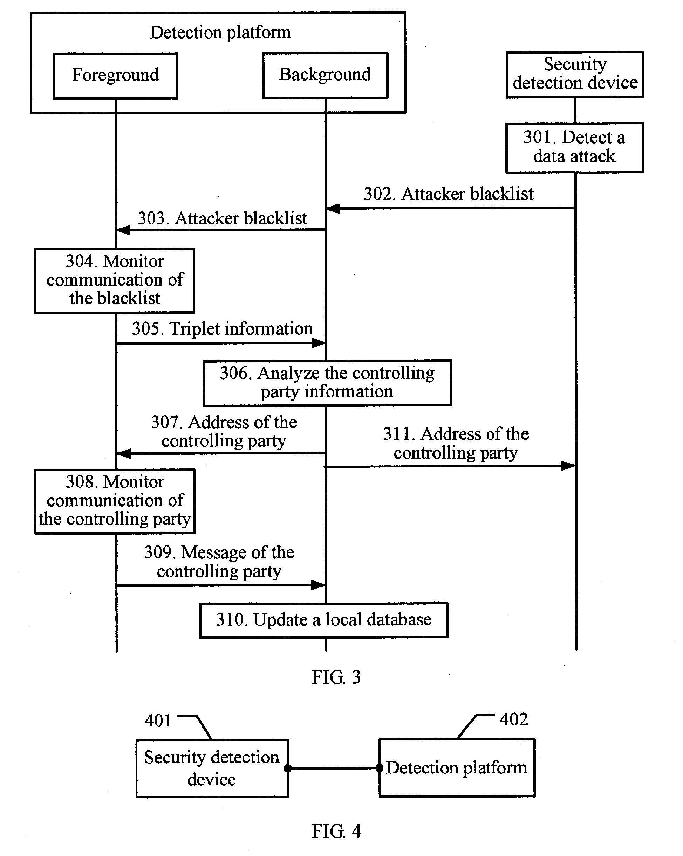

For convenience of understanding, a procedure that the detection platform detects an unknown Botnet is described in detail with a specific instance in the following description. Referring to FIG 3, still another embodiment of a Botnet detection method in an embodiment of the present invention includes the following steps.

Step 301: A security detection device detects a data attack.

Step 301 in this embodiment is the same as step 201 in the embodiment shown in FIG 2, and details are not described herein again.

Step 302 to Step 303: The security detection device sends an attacker blacklist to a foreground of a detection platform through a background of the detection platform.

The attacker blacklist in this embodiment includes an address of each attacker.

Step 304: The foreground of the detection platform monitors the attackers in the blacklist.

Step 305: The foreground of the detection platform sends triplet information to the background of the detection platform.

In this embodiment, after monitoring the attackers, the foreground of the detection platform obtains a monitoring result, that is, the triplet information, and the triplet information includes: an IP address of the attacker, a peer IP address communicating with the attacker, and a communication port.

It should be noted that, the triplet information in this embodiment may be further extended into more elements, which include more information and are not limited herein.

Step 306: The background of the detection platform analyzes the controlling party information.

In this embodiment, after receiving the triplet information, the background of the detection platform may obtain a suspicious address with the largest repetitive occurrence number in peer addresses communicating with the attacker address, judges whether the proportion occupied by the suspicious address in all peer addresses communicating with the attacker address is greater than a preset threshold value, and determines that the suspicious address is the address of the Botnet controlling party if the proportion is greater than the preset threshold value.

Step 307: The background of the detection platform sends the address of the Botnet controlling party to the foreground of the detection platform.

Step 308: The foreground of the detection platform monitors the Botnet controlling party.

After obtaining the address of the Botnet controlling party, the foreground of the detection platform may monitor communication of the address, thereby obtaining more information of the Botnet controlling party.

Step 309: The detection platform sends a message of the monitored Botnet controlling party to the background of the detection platform.

Step 310: The background of the detection platform updates a local database, and stores the address of the Botnet controlling party and the address of the attackers.

In this embodiment, the background of the detection platform may further send the address of the Botnet controlling party to the security detection device through step 311 for convenience of performing subsequent processing.

In the following description, the foregoing Botnet detection procedure is described with a specific application scenario and practical parameters; in this embodiment, a DDOS detection device as a security detection device is taken as an example, and a DDOS attack as a data attack is taken as an example.

When detecting the DDOS attack, the DDOS detection device generates attacker information according to the DDOS attack, the attacker information includes an attacker address list, and specific addresses include: "192.168.0.1 ", "192.168.0.2", "192.168.0.3" " and 192.168.0.4".

After receiving the attacker address list in the attacker information sent by the DDOS detection device, the detection platform may judge whether these addresses are locally stored.

If these addresses are stored, it indicates that the Botnet initiating the DDOS attack is a known Botnet, and if the detection platform locally enquires that the controlling party address of the Botnet is "192.168.0.5", the controlling party address "192.168.0.5" of the Botnet may be sent to the DDOS detection device for subsequent processing.

If these addresses are not stored yet, it indicates that the Botnet initiating the DDOS attack is an unknown Botnet, the detection platform may perform the message monitoring on these attacker. Specifically, a duration may be set, such as 10 minutes, the detection platform monitors messages flowing through these attackers in 10 minutes, and generates triplet information, that is, "attacker IP address; communication peer IP address; and communication port". For example, specific triplet information may be shown as follows:

"192.168.0.1; 192.168.0.7; 111", "192.168.0.1; 192.168.0.7; 111", "192.168.0.1; 192.168.0.7; 111", "192.168.0.1; 192.168.0.7; 111", "192.168.0.2; 192.168.0.7; 111", "192.168.0.2; 192.168.0.7; 111", "192.168.0.2;-192.168.0.7; 111", "192.168.0.3; 192.168.0.7; 111", "192.168.0.3; 192.168.0.7; 111", "192.168.0.3; 192.168.0.7; 111", "192.168.0.4; 192.168.0.9; 155", "192.168.0.4; 192.168.0.7; 111", "192.168.0.4; 192.168.0.7; 111".

It may be seen from the previous description that, these four attackers totally perform communication 13 times in 10 minutes, in which communication is performed with a host with an address being "192.168.0.7" 12 times, and communication ports are all 111, communication is performed with a host with an address being "192.168.0.9" only once, that is to say, the attackers communicate with the host with the address being "192.168.0.7" very frequently. It may be known according to the characteristics of the Botnet that, the address of "192.168.0.7" is a suspicious address. It is assumed that in a practical application, a threshold value is set, a specific value is related to the practical application, such as 90%, which denotes that 90% of all communication of each attacker is performed with the same host, and the proportion of the number of times by which the four attackers in this embodiment communicate with the host with the address being "192.168.0.7" to the total number of communication times is 12/13, which is greater than 90%, so it may be determined that the suspicious address of "192.168.0.7" is the address of the Botnet controlling party.

The detection platform stores the address of the Botnet controlling party and the addresses of the attackers, and the Botnet is set as the known Botnet.

The detection platform may further send the address of the Botnet controlling party to the DDOS detection device to perform source tracing for convenience of executing subsequent processing.

In this embodiment, the detection platform may perform the message monitoring on each attacker according to the attacker information sent by the security detection device, and determine the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time. Secondly, in this embodiment, when the controlling party information of the Botnet is determined, by utilizing characteristics of the Botnet, an address communicating with each attacker the most frequently is enquired and is used as the address of the Botnet controlling party, so the detection accuracy can be effectively improved.

Thirdly, in this embodiment, after determining the controlling party information of the Botnet, the detection platform may send the controlling party information of the Botnet to the security detection device, so the security detection device is enabled to perform source tracing, and subsequent processing is performed according to the controlling party information of the Botnet, thereby further ensuring the network security.

A Botnet detection system in an embodiment of the present invention is introduced in the following description, and referring to FIG 4, an embodiment of the Botnet detection system in the embodiment of the present invention includes:
a security detection device 401, configured to detect a data attack, and generate attacker information according to the data attack, in which the attacker information at least includes an attacker address list; and
a detection platform 402, configured to receive the attacker information sent by the security detection device, perform message monitoring on each attacker corresponding to the attacker address list if the detection platform determines that the addresses in the attacker address list do not belong to a known Botnet, and determine controlling party information of the Botnet according to a result of the message monitoring.

The detection platform 402 in this embodiment is further configured to send the determined controlling party information of the Botnet to the security detection device 401.

The security detection device 401 is further configured to receive the controlling party information of the Botnet sent by the detection platform 402.

The security detection device in this embodiment may be a DDOS detection device, an SPAM detection device, a firewall, or a UTM detection device.

For convenience of understanding, the Botnet detection system in the embodiment of the present invention is illustrated with a specific application scenario in the following description.

In this embodiment, the security detection device 401 may be a DDOS detection device, an SPAM detection device, a firewall, a UTM detection device, or a security detection device in other types. Accordingly, the data attack detected by the security detection device 401 is a DDOS attack, an SPAM attack, a firewall attack, a UTM attack, or a data attack in other types.

It should be noted that, in this embodiment, a procedure that the security detection device 401 detects the data attack is common sense known by persons skilled in the art.

After detecting the data attack, the security detection device 401 may generate the attacker information according to the data attack, and specifically, the attacker information at least includes an attacker address list, and additionally may further include some other information.

After generating the attacker information, the security detection device 401 may send the attacker information to the detection platform 402.

After receiving the attacker information sent by the security detection device 401, the detection platform 402 may judge whether the addresses in the list belong to the known Botnet from the attacker address list in the attacker information.

It should be noted that, after detecting a new Botnet, the detection platform 402 stores related information of the Botnet locally, in which the related information includes a controlling party address, a controlled party address, and other information, and may judge whether the address belongs to the known Botnet when subsequently obtaining the attacker address list.

If it is determined that the addresses in the attacker address list do not belong to the known Botnet, which illustrates that the data attack detected by the security detection device 401 is from an unknown Botnet, the detection platform 402 performs the message monitoring on the attacker, that is, intercepting a message flowing through the attacker, and analyzing the message.

After performing the message monitoring on the attacker, the detection platform 402 obtains the monitoring result, the detection platform 402 may judge which address communicates frequently with these attackers in the preset duration according to the monitoring result, if the detection platform 402 detects that each attacker communicates with the same address frequently, and the frequency exceeds a preset threshold, it may be determined that a host corresponding to the address is a Botnet controlling party, and the address is a Botnet controlling party address.

It should be noted that, after the detection platform 402 determines the controlling party information of the Botnet, the detection platform 402 may store the address of the Botnet controlling party and the address of the attacker locally, and the Botnet is set as a known Botnet.

If it is determined that the address in the attacker address list belong to the known Botnet, because the detection platform 402 has locally stored related information of the known Botnet, the controlling party information of the Botnet may be directly enquired.

After determining the controlling party information of the Botnet, the detection platform 402 may send the controlling party information of the Botnet to the security detection device 401, so as to be convenient for the security detection device 401 to perform subsequent processing according to the controlling party information of the Botnet, such as an attack counter-measure.

In this embodiment, the detection platform 402 may perform the message monitoring on each attacker according to the attacker information sent by the security detection device 401, and determine the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time.

Secondly, in this embodiment, when the detection platform 402 determines the controlling party information of the Botnet, by utilizing characteristics of the Botnet, an address communicating with each attacker the most frequently is enquired and is used as the address of the Botnet controlling party, so the detection accuracy can be effectively improved.

Thirdly, in this embodiment, after determining the controlling party information of the Botnet, the detection platform 402 may send the controlling party information of the Botnet to the security detection device 401, so the security detection device 401 is enabled to perform source tracing, and subsequent processing is performed according to the controlling party information of the Botnet, thereby further ensuring the network security.

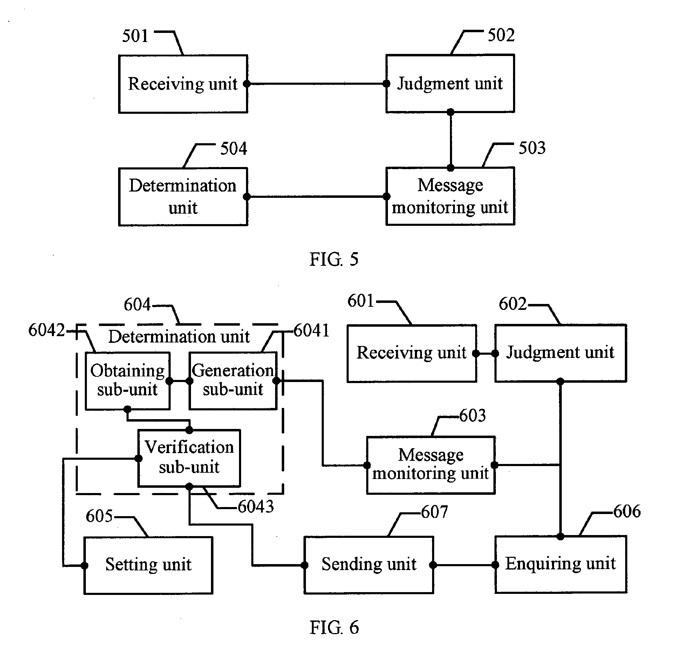

An embodiment of a detection platform in an embodiment of the present invention is introduced in the following description, and referring to FIG 5, an embodiment of the detection platform in the embodiment of the present invention includes:
a receiving unit 501, configured to receive attacker information sent by a security detection device, in which the attacker information is generated when the security detection device detects a data attack, and the attacker information at least includes an attacker address list;
a judgment unit 502, configured to judge whether addresses in the attacker address list belong to a known Botnet;
a message monitoring unit 503, configured to perform message monitoring on each attacker corresponding to the attacker address list if the addresses in the attacker address list do not belong to the known Botnet; and
a determination unit 504, configured to determine controlling party information of the Botnet according to a result of the message monitoring of the message monitoring unit 503.

In the embodiment of the present invention, the message monitoring unit 503 may perform the message monitoring on each attacker according to the attacker information sent by the security detection device, and the determination unit 504 determines the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time.

For convenience of understanding, a detection platform in an embodiment of the present invention is introduced in detail in the following description, and referring to FIG 6, another embodiment of the detection platform in the embodiment of the present invention includes:
a receiving unit 601, configured to receive attacker information sent by a security detection device, in which the attacker information is generated when the security detection device detects a data attack, and the attacker information at least includes an attacker address list;
a judgment unit 602, configured to judge whether addresses in the attacker address list belong to a known Botnet;
a message monitoring unit 603, configured to perform message monitoring on each attacker corresponding to the attacker address list if the addresses in the attacker address list do not belong to the known Botnet; and
a determination unit 604, configured to determine controlling party information of the Botnet according to a result of the message monitoring of the message monitoring unit 603.

In this embodiment, a procedure that the determination unit 604 determines the controlling party information of the Botnet is similar to the procedure in the embodiment shown in FIG 2 that the detection platform determines the controlling party information of the Botnet, and details are not described herein again.

The detection platform in this embodiment may further include:
a setting unit 605, configured to store the address of the Botnet controlling party and the address of the attacker, and set a Botnet where the Botnet controlling party is located as a known Botnet.

The detection platform in this embodiment may further include:
an enquiring unit 606, configured to enquire the controlling party information of the Botnet according to the locally stored information when the addresses in the attacker address list belong to the known Botnet.

The detection platform in this embodiment may further include:
a sending unit 607, configured to send the controlling party information of the Botnet to the security detection device.

It should be noted that, the determination unit 604 in this embodiment may further include:
a generation sub-unit 6041, configured to generate triplet information according to the result of the message monitoring, in which the triplet information includes an attacker address, a peer address communicating with the attacker address, and a communication port;
an obtaining sub-unit 6042, configured to obtain a suspicious address with the largest repetitive occurrence number in peer addresses communicating with the attacker address; and
a verification sub-unit 6043, configured to judge whether the proportion occupied by the suspicious address in all peer addresses communicating with the attacker address is greater than a preset threshold value, and determine that the suspicious address is the address of the Botnet controlling party if the proportion is greater than the preset threshold value.

In this embodiment, the procedure that the generation sub-unit 6041 generates the triplet information, the procedure that the obtaining sub-unit 6042 obtains the suspicious address, and the procedure that the verification sub-unit 6043 performs verification are similar to the procedures shown in FIG 3, and details are not described herein again.

In the embodiment of the present invention, the message monitoring unit 603 may perform the message monitoring on each attacker according to the attacker information sent by the security detection device, and the determination unit 604 determines the controlling party information of the Botnet according to the result of message monitoring; the solution of the embodiment of the present invention may perform message monitoring in real time on an attacker who is performing an attack, thereby obtaining related information of the Botnet, so the solution of the embodiment of the present invention can detect the Botnet in real time.

Another embodiment of a Botnet detection system in an embodiment of the present invention includes:
at least two security detection devices, each configured to detect a data attack, and generate attacker information according to the data attack, in which the attacker information at least includes an attacker address list; and
a detection platform, configured to receive the attacker information sent by a security detection device, perform message monitoring on each attacker corresponding to the attacker address list if the detection platform determines that the addresses in the attacker address list do not belong to a known Botnet, and determine controlling party information of the Botnet according to a result of the message monitoring.

Specifically, after generating the attacker information, a first security detection device may send the attacker information to the detection platform.

After receiving the attacker information sent by the security detection device, the detection platform may judge whether the addresses in the list belong to the known Botnet from the attacker address list in the attacker information. If it is determined that the addresses in the attacker address list do not belong to the known Botnet, which illustrates that the data attack detected by the first security detection device is from an unknown Botnet, the detection platform performs the message monitoring on the attacker, obtains a monitoring result, and then may judge which address communicates frequently with these attackers in the preset duration according to the monitoring result. If the detection platform detects that the attackers communicate with the same address frequently, and the frequency exceeds a preset threshold, it may be determined that a host corresponding to the address is a Botnet controlling party, and the address is a Botnet controlling party address.

After detecting a new Botnet, the detection platform stores related information of the Botnet locally, in which the related information includes a controlling party address, a controlled party address, and other information.

When detecting the data attack subsequently, a second security detection device sends the generated attacker information to the detection platform, and the detection platform may directly utilize the locally stored related information of the Botnet to determine whether the data attack detected by the second security detection device belongs to the known Botnet. When the data attack detected by the second security detection device is the same as the data attack detected previously by the first security detection device, the detection platform may determine the controlling party information of the Botnet without the necessity of performing the message monitoring on the attacker.

Likewise, if the data attack detected by the second security detection device is from an unknown Botnet, the detection platform performs the message monitoring on the attacker, and stores the monitoring result locally as information of the known Botnet. When the first security detection device detects the data attack subsequently, the detection platform may directly utilize the locally stored related information of the Botnet to determine whether the data attack detected by the first security detection device belongs to the known Botnet. If the data attack detected by the first security detection device is the same as the data attack detected previously by the second security detection device, the detection platform may determine the controlling party information of the Botnet without the necessity of performing the message monitoring on the attacker.

Therefore, in the embodiment of the present invention, the monitoring result may be obtained according to the data attack detected by one of the at least two security detection devices, and the related information of the Botnet stored in the detection platform locally is added as information of the known Botnet. If a data attack detected by other security detection devices is the same as the data attack detected previously by the security detection device, the detection platform may determine the controlling party information of the Botnet without the necessity of performing the message monitoring on the attacker. Therefore, the present invention implements information sharing between a plurality of security detection devices through a detection platform, thereby saving network resources.

Still another embodiment of a Botnet detection system in an embodiment of the present invention is introduced in the following description.

This embodiment is basically the same as the another embodiment of the foregoing Botnet detection system, and the difference lies in that a Botnet detection system according to this embodiment includes at least two detection platforms, in which each of the detection platforms corresponds to at least two security detection devices.

The at least two security detection devices are configured to detect a data attack, and generate attacker information according to the data attack, in which the attacker information at least includes an attacker address list.

The detection platform is configured to receive the attacker information sent by the security detection device, perform message monitoring on each attacker corresponding to the attacker address list if the detection platform determines that the addresses in the attacker address list do not belong to a known Botnet, and determine controlling party information of the Botnet according to a result of the message monitoring.

Relative to the another embodiment of the foregoing Botnet detection system, the embodiment of the present invention may implement data sharing between a plurality of detection platforms, thereby further saving network resources.

Persons of ordinary skill in the art may understand that all or part of the steps of the method according to the embodiments of the present invention may be implemented by a program instructing relevant hardware. The program may be stored in a computer readable storage medium, such as a Read-Only Memory (ROM), a magnetic disk, or an optical disk.

The Botnet detection method, the Botnet detection system, and the related device according to the present invention are introduced in detail in the previous description. Persons having ordinary skill in the art can make variations and modifications to the present invention in terms of the specific implementations and application scopes according to the ideas of the embodiments of the present invention. Therefore, the specification shall not be construed as limitations to the present invention.

## Claims

1. A Botnet detection method, comprising:
receiving (101), by a detection platform (402), attacker information sent by a security detection device (401), wherein the attacker information is generated when the security detection device (401) detects a data attack, and the attacker information at least comprises an attacker address list;
judging (204), by the detection platform (402), whether addresses in the attacker address list belong to a known Botnet;
performing (102), by the detection platform (402), message monitoring on each attacker corresponding to the attacker address list if the detection platform (402) determines that addresses in the attacker address list do not belong to the known Botnet; and
determining (103), by the detection platform (402), controlling party information of the Botnet according to a result of the message monitoring;
wherein the determining (103), by the detection platform (402), the controlling party information of the Botnet according to the result of the message monitoring comprises:
generating, by the detection platform (402), triplet information according to the result of the message monitoring, wherein the triplet information comprises an attacker address, a peer address communicating with the attacker address, and a communication port;
obtaining, by the detection platform (402), a suspicious address with the largest repetitive occurrence number in peer addresses communicating with the attacker address; and
judging, by the detection platform (402), whether the proportion occupied by the suspicious address in all peer addresses communicating with the attacker address is greater than a preset threshold value, and determining that the suspicious address is the address of the Botnet controlling party if the proportion is greater than the preset threshold value.

2. The method according to claim 1, wherein
the security detection device (401) is a Distributed Denial Of Service, DDOS, detection device, and the data attack detected by the security detection device is a DDOS attack; or
the security detection device (401) is an SPAM detection device, and the data attack detected by the security detection device (401) is an SPAM attack; or
the security detection device (401) is a firewall, and the data attack detected by the security detection device (401) is a firewall attack; or
the security detection device (401) is a Unified Threat Management, UTM, detection device, and the data attack detected by the security detection device (401) is a UTM attack.

3. The method according to claim 1, wherein after the determining that the suspicious address is the address of the Botnet controlling party, the method further comprises:
Storing (310) the address of the Botnet controlling party and the address of the attacker, and setting a Botnet where the Botnet controlling party is located as a known Botnet.

4. The method according to claim 1 or 2, wherein after the determining, by the detection platform (402), the controlling party information of the Botnet according to the result of the message monitoring, the method further comprises:
sending (208), by the detection platform (402), the determined controlling party information of the Botnet to the security detection device (401).

5. The method according to claim 1 or 2, further comprising:
enquiring (207) the controlling party information of the Botnet according to the locally stored information if the detection platform (402) determines that the addresses in the attacker address list belong to the known Botnet; and
sending (208), by the detection platform (402), the determined controlling party information of the Botnet to the security detection device (401).

6. A detection platform (402), comprising:
a receiving unit (501), configured to receive attacker information sent by a security detection device (401), wherein the attacker information is generated when the security detection device (401) detects a data attack, and the attacker information at least comprises an attacker address list;
a judgment unit (502), configured to judge whether addresses in the attacker address list belong to a known Botnet;
a message monitoring unit (503), configured to perform message monitoring on each attacker corresponding to the attacker address list if the addresses in the attacker address list do not belong to the known Botnet; and
a determination unit (504), configured to determine controlling party information of the Botnet according to a result of the message monitoring of the message monitoring unit;
wherein the determination unit (504) comprises:
a generation sub-unit (6041), configured to generate triplet information according to the result of the message monitoring, wherein the triplet information comprises an attacker address, a peer address communicating with the attacker address, and a communication port;
an obtaining sub-unit (6042), configured to obtain a suspicious address with the largest repetitive occurrence number in peer addresses communicating with the attacker address; and
a verification sub-unit (6043), configured to judge whether the proportion occupied by the suspicious address in all peer addresses communicating with the attacker address is greater than a preset threshold value, and determine that the suspicious address is the address of the Botnet controlling party if the proportion is greater than the preset threshold value.

7. The detection platform (402) according to claim 6, further comprising:
a setting unit (605), configured to store the address of the Botnet controlling party and the address of the attacker, and set a Botnet where the Botnet controlling party is located as a known Botnet.

8. The detection platform (402) according to claim 6, further comprising:
an enquiring unit (606), configured to enquire the controlling party information of the Botnet according to the locally stored information when the addresses in the attacker address list belong to the known Botnet.

9. The detection platform (402) according to any one of claims 6 to 8, further comprising:
a sending unit (607), configured to send the controlling party information of the Botnet to the security detection device (401).

10. A system for a Botnet detection, **characterized in that** the system for the Botnet detection comprises a detection platform (402) according to any one of claims 6 to 9 and a security detection device (401), configured to detect a data attack, and generate attacker information according to the data attack, wherein the attacker information at least comprises an attacker address list.

11. The system for a Botnet detection according to claim 10, wherein: the detection platform (402) is further configured to send the determined controlling party information of the Botnet to the security detection device (401); and
the security detection device (401) is further configured to receive the controlling party information of the Botnet sent by the detection platform (402).

12. The system for a Botnet detection according to claim 10-11, wherein:
the security detection device (401) is a Distributed Denial Of Service, DDOS, detection device, and the data attack detected by the security detection device is a DDOS attack; or
the security detection device (401) is an SPAM detection device, and the attack detected by the security detection device is an SPAM attack; or
the security detection device (401) is a firewall, and the data attack detected by the security detection device is a firewall attack; or
the security detection device (401) is a Unified Threat Management, UTM, detection device, and the data attack detected by the security detection device is a UTM attack.

## Patentansprüche

1. Botnetz-Erkennungsverfahren, das die folgenden Schritte aufweist:
Empfangen (101) durch eine Erkennungsplattform (402) von Angreiferinformationen, die durch eine Sicherheitserkennungsvorrichtung (401) gesendet werden, wobei die Angreiferinformationen erzeugt werden, wenn die
Sicherheitserkennungsvorrichtung (401) einen Datenangriff erkennt, und die Angreiferinformationen mindestens eine Angreiferadressenliste aufweisen;
Entscheiden (204) durch die Erkennungsplattform (402), ob Adressen in der Angreiferadressenliste zu einem bekannten Botnetz gehören;
Durchführen (102) durch die Erkennungsplattform (402) einer Nachrichtenüberwachung bei jedem Angreifer, der der Angreiferadressenliste entspricht, wenn die Erkennungsplattform (402) feststellt, dass Adressen in der Angreiferadressenliste nicht zu dem bekannten Botnetz gehören; und
Feststellen (103) durch die Erkennungsplattform (402) von Steuerteilnehmerinformationen des Botnetzes gemäß einem Resultat der Nachrichtenüberwachung;
wobei das Feststellen (103) durch die Erkennungsplattform (402) der Steuerteilnehmerinformationen des Botnetzes gemäß dem Resultat der Nachrichtenüberwachung aufweist:
Erzeugen durch die Erkennungsplattform (402) von Triplettinformationen gemäß dem Resultat der Nachrichtenüberwachung, wobei die Triplettinformationen eine Angreiferadresse, eine Peer-Adresse, die mit der Angreiferadresse kommuniziert, und einen Kommunikationsport umfassen;
Beschaffen durch die Erkennungsplattform (402) einer verdächtigen Adresse mit der größten Anzahl des wiederholten Auftretens in Peer-Adressen, die mit der Angreiferadresse kommunizieren; und
Entscheiden durch die Erkennungsplattform (402), ob der Anteil, der durch die verdächtige Adresse in allen Peer-Adressen eingenommen wird, die mit der Angreiferadresse kommunizieren, größer als ein vorgegebener Schwellenwert ist, und
Feststellen, dass die verdächtige Adresse die Adresse des Botnetz-Steuerteilnehmers ist, wenn der Anteil größer als der vorgegebene Schwellenwert ist.

2. Verfahren nach Anspruch 1, wobei
die Sicherheitserkennungsvorrichtung (401) eine "Distributed Denial Of Service" (DDOS-) Erkennungsvorrichtung ist und der durch die Sicherheitserkennungsvorrichtung erkannte Datenangriff ein DDOS-Angriff ist; oder die Sicherheitserkennungsvorrichtung (401) eine SPAM-Erkennungsvorrichtung ist und der durch die Sicherheitserkennungsvorrichtung (401) erkannte Datenangriff ein SPAM-Angriff ist; oder
die Sicherheitserkennungsvorrichtung (401) eine Firewall ist und der durch die Sicherheitserkennungsvorrichtung (401) erkannte Datenangriff ein Firewall-Angriff ist; oder
die Sicherheitserkennungsvorrichtung (401) eine "Unified Threat Management" (UTM-) Erkennungsvorrichtung ist und der durch die Sicherheitserkennungsvorrichtung (401) erkannte Datenangriff ein UTM-Angriff ist.

3. Verfahren nach Anspruch 1, wobei nach dem Feststellen, dass die verdächtige Adresse die Adresse des Botnetz-Steuerteilnehmers ist, das Verfahren ferner aufweist:
Speichern (310) der Adresse des Botnetz-Steuerteilnehmers und der Adresse des Angreifers, und Festlegen eines Botnetzes, wo sich der Botnetz-Steuerteilnehmer befindet, als ein bekanntes Botnetz.

4. Verfahren nach Anspruch 1 oder 2, wobei nach dem Feststellen durch die Erkennungsplattform (402) der Steuerteilnehmerinformationen des Botnetzes gemäß dem Resultat der Nachrichtenüberwachung das Verfahren ferner aufweist:
Senden (208) durch die Erkennungsplattform (402) der festgestellten Steuerteilnehmerinformationen des Botnetzes an die Sicherheitserkennungsvorrichtung (401).

5. Verfahren nach Anspruch 1 oder 2, das ferner aufweist:
Abfragen (207) der Steuerteilnehmerinformationen des Botnetzes gemäß den lokal gespeicherten Informationen, wenn die Erkennungsplattform (402) feststellt, dass die Adressen in der Angreiferadressenliste zu dem bekannten Botnetz gehören; und Senden (208) durch die Erkennungsplattform (402) der festgestellten Steuerteilnehmerinformationen des Botnetzes an die Sicherheitserkennungsvorrichtung (401).

6. Erkennungsplattform (402), die Folgendes aufweist:
eine Empfangseinheit (501), die konfiguriert ist, Angreiferinformationen zu empfangen, die durch eine Sicherheitserkennungsvorrichtung (401) gesendet werden, wobei die Angreiferinformationen erzeugt werden, wenn die Sicherheitserkennungsvorrichtung (401) einen Datenangriff erkennt und die Angreiferinformationen mindestens eine Angreiferadressenliste aufweisen;
eine Entscheidungseinheit (502), die konfiguriert ist, zu entscheiden, ob Adressen in der Angreiferadressenliste zu einem bekannten Botnetz gehören;
eine Nachrichtenüberwachungseinheit (503), die konfiguriert ist, eine Nachrichtenüberwachung bei jedem Angreifer durchzuführen, der der Angreiferadressenliste entspricht, wenn die Adressen in der Angreiferadressenliste nicht zu dem bekannten Botnetz gehören; und
eine Feststellungseinheit (504), die konfiguriert ist, Steuerteilnehmerinformationen des Botnetzes gemäß einem Resultat der Nachrichtenüberwachung der Nachrichtenüberwachungseinheit festzustellen;
wobei die Feststellungseinheit (504) aufweist:
eine Erzeugungsuntereinheit (6041), die konfiguriert ist, gemäß dem Resultat der Nachrichtenüberwachung Triplettinformationen zu erzeugen, wobei die Triplettinformationen eine Angreiferadresse, eine Peer-Adresse, die mit der Angreiferadresse kommuniziert, und einen Kommunikationsport umfassen;
eine Beschaffungsuntereinheit (6042), die konfiguriert ist, eine verdächtige Adresse mit der größten Anzahl des wiederholten Auftretens in Peer-Adressen zu beschaffen, die mit der Angreiferadresse kommunizieren; und
eine Verifizierungsuntereinheit (6043), die konfiguriert ist, zu entscheiden, ob der Anteil, der durch die verdächtigen Adresse in allen Peer-Adressen eingenommen wird, die mit der Angreiferadresse kommunizieren, größer als ein vorgegebener Schwellenwert ist, und festzustellen, dass die verdächtigen Adresse die Adresse des Botnetz-Steuerteilnehmers ist, wenn der Anteil größer als der vorgegebene Schwellenwert ist.

7. Erkennungsplattform (402) nach Anspruch 6, die ferner aufweist:
eine Festlegungseinheit (605), die konfiguriert ist, die Adresse des Botnetz-Steuerteilnehmers und die Adresse des Angreifers zu speichern, und ein Botnetz, wo sich der Botnetz-Steuerteilnehmer befindet, als ein bekanntes Botnetz festzulegen.

8. Erkennungsplattform (402) nach Anspruch 6, die ferner aufweist:
eine Abfrageeinheit (606), die konfiguriert ist, die Steuerteilnehmerinformationen des Botnetzes gemäß den lokal gespeicherten Informationen abzufragen, wenn die Adressen in der Angreiferadressenliste zu dem bekannten Botnetz gehören.

9. Erkennungsplattform (402) nach einem der Ansprüche 6 bis 8, die ferner aufweist:
eine Sendeeinheit (607), die konfiguriert ist, die Steuerteilnehmerinformationen des Botnetzes an die Sicherheitserkennungsvorrichtung (401) zu senden.

10. System für eine Botnetz-Erkennung, **dadurch gekennzeichnet, dass** das System für die Botnetz-Erkennung aufweist:
eine Erkennungsplattform (402) nach einem der Ansprüche 6 bis 9 und eine Sicherheitserkennungsvorrichtung (401), die konfiguriert ist, einen Datenangriff zu erkennen und Angreiferinformationen gemäß dem Datenangriff zu erzeugen, wobei die Angreiferinformationen mindestens eine Angreiferadressenliste umfassen.

11. System für eine Botnetz-Erkennung nach Anspruch 10, wobei:
die Erkennungsplattform (402) ferner konfiguriert ist, die festgestellten Steuerteilnehmerinformationen des Botnetzes an die Sicherheitserkennungsvorrichtung (401) zu senden; und
die Sicherheitserkennungsvorrichtung (401) ferner konfiguriert ist, die Steuerteilnehmerinformationen des Botnetzes zu empfangen, die durch die Erkennungsplattform (402) gesendet werden.

12. System für eine Botnetz-Erkennung nach Anspruch 10 bis 11, wobei:
die Sicherheitserkennungsvorrichtung (401) eine "Distributed Denial Of Service" (DDOS-) Erkennungsvorrichtung ist, und der durch die Sicherheitserkennungsvorrichtung erkannte Datenangriff ein DDOS-Angriff ist; oder
die Sicherheitserkennungsvorrichtung (401) eine SPAM-Erkennungsvorrichtung ist und der durch die Sicherheitserkennungsvorrichtung erkannte Angriff ein SPAM-Angriff ist; oder
die Sicherheitserkennungsvorrichtung (401) eine Firewall ist und der durch die Sicherheitserkennungsvorrichtung erkannte Datenangriff ein Firewall-Angriff ist; oder
die Sicherheitserkennungsvorrichtung (401) eine "Unified Threat Management" (UTM-) Erkennungsvorrichtung ist und der durch die Sicherheitserkennungsvorrichtung erkannte Datenangriff ein UTM-Angriff ist.

## Revendications

1. Procédé de détection d'un réseau de machines malveillantes (Botnet), comprenant :
la réception (101), par une plateforme de détection (402), d'informations d'attaquants envoyées par un dispositif de détection de sécurité (401), les informations d'attaquants étant générées lorsque le dispositif de détection de sécurité (401) détecte une attaque de données, et les informations d'attaquants comprenant au moins une liste d'adresses d'attaquants ;
le jugement (204), par la plateforme de détection (402), du fait de savoir si des adresses contenues dans la liste d'adresses d'attaquants appartiennent à un Botnet connu ;
l'exécution (102), par la plateforme de détection (402), d'une surveillance de messages sur chaque attaquant correspondant à la liste d'adresses d'attaquants si la plateforme de détection (402) détermine que des adresses contenues dans la liste d'adresses d'attaquants n'appartiennent pas au Botnet connu ; et
la détermination (103), par la plateforme de détection (402), d'informations de partie contrôlante du Botnet conformément à un résultat de la surveillance de messages ;
dans lequel la détermination (103), par la plateforme de détection (402), des informations de partie contrôlante du Botnet conformément au résultat de la surveillance de messages comprend :
la génération, par la plateforme de détection (402), d'informations de triplets conformément au résultat de la surveillance de messages, les informations de triplets comprenant une adresse d'attaquant, une adresse d'homologue communiquant avec l'adresse d'attaquant, et un port de communication ;
l'obtention, par la plateforme de détection (402), d'une adresse suspecte ayant le nombre d'occurrences répétitives le plus grand parmi des adresses d'homologues communiquant avec l'adresse d'attaquant ; et
le jugement, par la plateforme de détection (402), du fait de savoir si la proportion occupée par l'adresse suspecte dans toutes les adresses d'homologues communiquant avec l'adresse d'attaquant est supérieure à une valeur de seuil prédéfinie, et la détermination du fait que l'adresse suspecte est l'adresse de la partie contrôlant le Botnet si cette proportion est supérieure à la valeur de seuil prédéfinie.

2. Procédé selon la revendication 1, dans lequel
le dispositif de détection de sécurité (401) est un dispositif de détection de déni de service distribué, DDOS (Distributed Denial of Service), et l'attaque de données détectée par le dispositif de détection de sécurité est une attaque DDOS ; ou
le dispositif de détection de sécurité (401) est un dispositif de détection de courriels indésirables (SPAM), et l'attaque de données détectée par le dispositif de détection de sécurité (401) est une attaque de SPAM ; ou
le dispositif de détection de sécurité (401) est un pare-feu, et l'attaque de données détectée par le dispositif de détection de sécurité (401) est une attaque de pare-feu ;
ou
le dispositif de détection de sécurité (401) est un dispositif de détection de gestion de menace unifiée, UTM (Unified Threat Management), et l'attaque de données détectée par le dispositif de détection de sécurité (401) est une attaque UTM.

3. Procédé selon la revendication 1, dans lequel, après la détermination du fait que l'adresse suspecte est l'adresse de la partie contrôlant le Botnet, le procédé comprend en outre :
le stockage (310) de l'adresse de la partie contrôlant le Botnet et de l'adresse de l'attaquant, et la définition d'un Botnet dans lequel se trouve la partie contrôlant le Botnet en tant que Botnet connu.

4. Procédé selon la revendication 1 ou 2, dans lequel, après la détermination, par la plateforme de détection (402), des informations de partie contrôlante du Botnet conformément au résultat de la surveillance de messages, le procédé comprend en outre :
l'envoi (208), par la plateforme de détection (402), des informations de partie contrôlante déterminées du Botnet au dispositif de détection de sécurité (401).

5. Procédé selon la revendication 1 ou 2, comprenant en outre :
la demande (207) des informations de partie contrôlante du Botnet conformément aux informations stockées localement si la plateforme de détection (402) détermine que les adresses contenues dans la liste d'adresses d'attaquants appartiennent au Botnet connu ; et
l'envoi (208), par la plateforme de détection (402), des informations de partie contrôlante déterminées du Botnet au dispositif de détection de sécurité (401).

6. Plateforme de détection (402), comprenant :
une unité de réception (501), configurée pour recevoir des informations d'attaquants envoyées par un dispositif de détection de sécurité (401), les informations d'attaquants étant générées lorsque le dispositif de détection de sécurité (401) détecte une attaque de données, et les informations d'attaquants comprenant au moins une liste d'adresses d'attaquants ;
une unité de jugement (502), configurée pour juger si des adresses contenues dans la liste d'adresses d'attaquants appartiennent à un Botnet connu ;
une unité de surveillance de messages (503), configurée pour effectuer une surveillance de messages sur chaque attaquant correspondant à la liste d'adresses d'attaquants si les adresses contenues dans la liste d'adresses d'attaquants n'appartiennent pas au Botnet connu ; et
une unité de détermination (504), configurée pour déterminer des informations de partie contrôlante du Botnet conformément à un résultat de la surveillance de messages de l'unité de surveillance de messages ;
dans laquelle l'unité de détermination (504) comprend :
une sous-unité de génération (6041), configurée pour générer des informations de triplets conformément au résultat de la surveillance de messages, les informations de triplets comprenant une adresse d'attaquant, une adresse d'homologue communiquant avec l'adresse d'attaquant, et un port de communication ;
une sous-unité d'obtention (6042), configurée pour obtenir une adresse suspecte ayant le nombre d'occurrences répétitives le plus grand parmi des adresses d'homologues communiquant avec l'adresse d'attaquant ; et
une sous-unité de vérification (6043), configurée pour juger si la proportion occupée par l'adresse suspecte parmi toutes les adresses d'homologues communiquant avec l'adresse d'attaquant est supérieure à une valeur de seuil prédéfinie, et déterminer que l'adresse suspecte est l'adresse de la partie contrôlant le Botnet si la proportion est supérieure à la valeur de seuil prédéfinie.

7. Plateforme de détection (402) selon la revendication 6, comprenant en outre :
une unité de définition (605), configurée pour stocker l'adresse de la partie contrôlant le Botnet et l'adresse de l'attaquant, et définir un Botnet sur lequel se trouve la partie contrôlant le Botnet en tant que Botnet connu.

8. Plateforme de détection (402) selon la revendication 6, comprenant en outre :
une unité de demande (606), configurée pour demander les informations de partie contrôlante du Botnet conformément aux informations stockées localement lorsque les adresses contenues dans la liste d'adresses d'attaquants appartiennent au Botnet connu.

9. Plateforme de détection (402) selon l'une quelconque des revendications 6 à 8, comprenant en outre :
une unité d'envoi (607), configurée pour envoyer des informations de partie contrôlante du Botnet au dispositif de détection de sécurité (401).

10. Système de détection de Botnet, **caractérisé en ce que** le système de détection de Botnet comprend une plateforme de détection (402) selon l'une quelconque des revendications 6 à 9 et un dispositif de détection de sécurité (401), configuré pour détecter une attaque de données et générer des informations d'attaquants conformément à l'attaque de données, les informations d'attaquants comprenant au moins une liste d'adresses d'attaquants.

11. Système de détection de Botnet selon la revendication 10, dans lequel la plateforme de détection (402) est en outre configurée pour envoyer des informations de partie contrôlante déterminées du Botnet au dispositif de détection de sécurité (401) ; et
le dispositif de détection de sécurité (401) est en outre configuré pour recevoir les informations de partie contrôlante du Botnet envoyées par la plateforme de détection (402).

12. Système de détection de Botnet selon les revendications 10-11, dans lequel :
le dispositif de détection de sécurité (401) est un dispositif de détection de déni de service distribué, DDOS, et l'attaque de données détectée par le dispositif de détection de sécurité est une attaque DDOS ; ou
le dispositif de détection de sécurité (401) est un dispositif de détection de SPAM, et l'attaque détectée par le dispositif de détection de sécurité est une attaque de SPAM ; ou
le dispositif de détection de sécurité (401) est un pare-feu, et l'attaque détectée par le dispositif de détection de sécurité est une attaque de pare-feu ; ou
le dispositif de détection de sécurité (401) est un dispositif de gestion de menace unifiée, UTM, et l'attaque détectée par le dispositif de détection de sécurité est une attaque UTM.
